# EUROPÄISCHE PATENTSCHRIFT

(11) **EP 3 899 476 B1**
(45) Veröffentlichungstag und Bekanntmachung des Hinweises auf die Patenterteilung: **27.07.2022**
(21) Anmeldenummer: 19831726.5
(22) Anmeldetag: 20.12.2019
(51) Int. Cl.: G01M 3/28, G01M 3/32, F17D 5/04, B65D 90/24, B65D 90/50

(54) **VERFAHREN ZUR DETEKTION UND VERHINDERUNG VON LECKAGEN**
METHOD FOR DETECTING AND PREVENTING LEAKAGE
PROCÉDÉ DE DÉTECTION ET DE PRÉVENTION DE FUITE

(30) Priorität: 20.12.2018 EP 18214779
(43) Veröffentlichungstag der Anmeldung: 27.10.2021
(73) Patentinhaber: OMV Downstream GmbH, 1020 Wien (AT); INWA AG, 9464 Rüthi (CH)
(72) Erfinder: HOFFER, Ronald Jürgen, 7400 Oberwart (AT); PFAFFL, Thomas, 2122 Münichsthal (AT); STEINBRUGGER, Christian, 1120 Wien (AT); HÖRBURGER, Jürgen, 9464 Rüthi (CH); KAHR, Robert, 8047 Graz (AT)
(74) Vertreter: SONN Patentanwälte OG
(86) Internationale Anmeldenummer: PCT/EP2019/086638
(87) Internationale Veröffentlichungsnummer: WO 2020/127947

(56) Entgegenhaltungen:
- CN-U- 203 259 311
- DE-A1- 4 135 200
- DE-A1- 4 320 986
- US-A1- 2005 087 258
- US-A1- 2007 221 673
- US-A1- 2012 136 579

## Beschreibung

Die Erfindung betrifft ein Verfahren zur Detektion und Verhinderung von Leckagen eines doppelwandigen Behälters zum Lagern oder Speichern von giftigen, ätzenden, reizenden und/oder brennbaren Medien, wobei der doppelwandige Behälter eine innere Wand und eine äußere Wand aufweist, wobei zwischen der inneren Wand und der äußeren Wand ein Hohlraum ausgebildet ist, wobei im Hohlraum ein Überdruck erzeugt wird, wobei dem Hohlraum bei einer Leckage der inneren Wand ein Gas zugeführt wird, um einen Überdruck in dem Hohlraum aufrecht zu erhalten, und ein entsprechendes Behältersystem.

Doppelwandige Behälter weisen eine innere und eine äußere Wand auf und werden insbesondere verwendet, um die Wahrscheinlichkeit eines Austretens der in den doppelwandigen Behältern gespeicherten Medien zu reduzieren. Der Vorteil gegenüber Behältern mit nur einer Wand besteht darin, dass bei einer Leckage der inneren Wand die äußere Wand das gespeicherte Medium am Austreten hindert. Besonders relevant ist das Lagern/Speichern von giftigen, ätzenden, reizenden und/oder brennbaren Medien, die nicht in die Umwelt gelangen dürfen. Insbesondere stellt die Speicherung von ätzenden Medien in Behältern eine Herausforderung dar, da diese die Wände des Behälters, in dem sie gespeichert sind, angreifen und somit Leckagen verursachen können. Um bei der Speicherung von ätzenden Medien ein Zerstören der inneren und äußeren Wand zu verhindern, haben sich Vorrichtungen zur Detektion von Leckagen bewährt. Diese erkennen eine Leckage in der inneren Wand und geben dem Betreiber der den Behälter beinhaltenden Anlage ein Signal, sodass dieser auf die Leckage der inneren Behälterwand reagieren und ein Austreten des Mediums aus dem Behälter verhindern kann.

Ein derartiger doppelwandiger Behälter ist beispielsweise aus der EP 1 179 505 A1 bekannt. Darin ist eine Vorrichtung zum Lagern von Flüssigkeiten offenbart, die einen doppelwandigen Behälter, einen am Behältertiefpunkt angeordneten Auslauf aus einer doppelwandigen Rohrleitung sowie zwei Absperrarmaturen, die durch ein Verbindungselement verbunden sind, aufweist. Der doppelwandige Behälter, die doppelwandige Rohrleitung und die zwei Absperrarmaturen weisen jeweils einen Überwachungsraum auf, wobei die Überwachungsräume miteinander verbunden sind, um ein unkontrolliertes Austreten einer im Behälter gelagerten Flüssigkeit zu verhindern. Überwacht wird der gemeinsame Überwachungsraum mit einem Druck-Leckanzeigegerät, das bei einer Leckage ein Signal an eine Meldeeinrichtung weitergibt. Nachteilig ist dabei, dass diese Detektion von Leckagen nur bei Flüssigkeiten, nicht jedoch bei Gasen funktioniert. Darüber hinaus ist nachteilig, dass sich im Falle einer Leckage der inneren Wand die Flüssigkeit in den Überwachungsräumen des Behälters, der Rohrleitung und der Absperrarmaturen ansammelt.

Aus der DE 41 35 200 A ist ein Verfahren der eingangs angeführten Art bekannt, das eine Leckageanzeigeeinrichtung für doppelwandige Leckagebehälter, doppelwandige Rohre und dgl. zur Lagerung und zum Transport von wassergefährdenden Flüssigkeiten aufweist. Die Leckageanzeigeeinrichtung weist einen unter Überdruck stehenden Überwachungsraum des Behälters oder des Rohres auf, der durch einen Innenmantel und einen Außenmantel gebildet ist. Ein bei Normalbetrieb durch natürliche Undichtheiten der Leckanzeigeeinrichtung und der Zuleitung bewirkter Druckabfall im Überwachungsraum wird innerhalb eines festgesetzten Regelbereiches durch das Nachfüllen von Druckgas aus dem Druckgasspeicher nach Öffnen des Magnetventils über die Drosseleinrichtung in der Zuleitung durch den Nachfüll-Druckschalter ausgeglichen.

Die US 2012/136579 A1 offenbart ein Verfahren zum Eruieren und Quantifizieren einer Leckage zwischen einem ersten und einem zweiten Rohr, wobei das erste Rohr zumindest zum Teil vom zweiten Rohr umgeben ist. Mithilfe einer Messanordnung, die einen Durchflussmesser und einen Druckmesser umfasst, kann bei einer Leckage im ersten Rohr eine konstante Druckdifferenz zwischen den Rohren hergestellt werden.

Die DE 43 20 986 A1 zeigt eine andersartige Förderleitung und ein Verfahren zur Überwachung einer Förderleitung, wobei diese Förderleitung doppelwandig ausgebildet ist.

Weiters ist aus der US 2007/221673 A1 ein Lagerbehälter für wassergefährdende Flüssigkeiten mit einem Leckageerkennungs- und - rückhaltesystem mit einer einen Tank umgebenden Rinne, die sich direkt an der Außenwand des Tanks anschließt und zum Auffangen ausgetretener Flüssigkeit dient, einen Rinnenablauf, einen Flüssigkeitssammelbehälter sowie ein Detektionssystem für die wassergefährdenden Flüssigkeiten, bekannt. Der Rinnenablauf ist geeignet, die in der Rinne aufgefangene Flüssigkeit in den Flüssigkeitssammelbehälter zu führen, welcher mit dem Detektionssystem ausgestattet ist.

In der US 2005/087258 A1 ist eine Kraftstoffdüse einer Betankungsanlage offenbart, die eine PFA-Beschichtung aufweist.

In der CN 203 259 311 U ist ein Leckagemessgerät eines Entschwefelungs-Gas-Gas-Wärmetauschersystems offenbart, das ein Probenahmerohr aufweist. Mithilfe des Leckagemessgeräts werden Proben aus einem Abgas des Gas-Gas-Wärmetauschers entnommen, um Leckagen im Wärmetauscher zu detektieren.

Die Aufgabe der vorliegenden Erfindung besteht darin, zumindest einzelne Nachteile des Standes der Technik zu lindern bzw. zu beheben. Die Erfindung setzt sich insbesondere zum Ziel, ein Verfahren zur zuverlässigen Erkennung und Vermeidung von Leckagen eines doppelwandigen Behälters zu erzielen.

Die vorliegende Erfindung stellt ein Verfahren zur Detektion und Verhinderung von Leckagen eines doppelwandigen Behälters der eingangs angeführten Art zur Verfügung, wobei der Überdruck im Hohlraum gemessen wird und der Druck und/oder der Durchfluss des dem Hohlraum zugeführten Gases geregelt wird, sodass der Überdruck in dem Hohlraum bezogen auf den Druck im Inneren des doppelwandigen Behälters zwischen 5 mbar und 50 mbar ist.

Dadurch wird die genannte Aufgabe gelöst.

Dementsprechend stellt die Erfindung auch ein Behältersystem zum Lagern oder Speichern von giftigen, ätzenden, reizenden und/oder brennbaren Medien zur Verfügung. Dieses Behältersystem weist zumindest auf:
- einen doppelwandigen Behälter, der eine innere Wand und eine äußere Wand aufweist, wobei zwischen der inneren Wand und der äußeren Wand ein Hohlraum ausgebildet ist;
- ein Verdichter, bevorzugt ein Seitenkanalverdichter;
- eine mit der Führung eines Gases vorgesehenen Leitung zum Verbinden der äußeren Wand mit dem Verdichter;
- eine Steuer-/Regelungsvorrichtung, bevorzugt ein Regelventil, insbesondere ein Bypassregelventil, zum Steuern/Regeln eines Gasdurchflusses in der Leitung, sodass der Überdruck in dem Hohlraum bezogen auf den Druck im Inneren des doppelwandigen Behälters zwischen 5 mbar und 50 mbar ist; und
- ein Druckmessgerät zur Messung des Druckes im Hohlraum des doppelwandigen Behälters.

Auch dadurch wird die genannte Aufgabe gelöst.

Überraschenderweise wird mit dem erfindungsgemäßen Verfahren das Medium, das sich im Inneren des doppelwandigen Behälters befindet, bei einer Leckage der inneren Wand nicht aus dem Behälter austreten, da, aufgrund des absoluten Drucks im Hohlraum zwischen der inneren und der äußeren Wand des Behälters, der größer ist als der absolute Druck im Behälter, sich eine Strömung vom Hohlraum durch die Leckage der inneren Wand in das Innere des Behälters einstellt. Dabei ist das Innere des Behälters das vom Behälter umschlossene Volumen, wobei der Behälter nach oben zumindest teilweise geöffnet oder komplett geschlossen sein kann.

Das erfindungsgemäße Behältersystem umfasst einen doppelwandigen Behälter, der eine innere Wand und eine äußere Wand aufweist, wobei zwischen der inneren und der äußeren Wand ein Hohlraum ausgebildet ist. Des Weiteren weist das Behältersystem zum Erzeugen eines Überdrucks einen Verdichter, bevorzugt einen Seitenkanalverdichter, auf, der mit der äußeren Wand des doppelwandigen Behälters über eine zur Führung eines Gases vorgesehenen Leitung verbunden ist. Mithilfe eines Druckmessgeräts wird der Druck im Hohlraum des Behälters gemessen und über eine Steuer-/Regelungsvorrichtung ein Gasdurchfluss in der Leitung gesteuert bzw. geregelt. Fällt der Überdruck im Hohlraum des Behälters aufgrund einer Leckage ab, wird der sich verringernde Druck über das Druckmessgerät gemessen und das Drucksignal an die Steuer-/Regelungsvorrichtung gesendet. Daraufhin regelt die Steuer-/Regelungsvorrichtung, die bevorzugt ein Regelventil, insbesondere ein Bypassregelventil, ist, die Gasdurchflussrate in der Leitung, um geregelt Gas in den Hohlraum zu befördern und somit den Überdruck in dem Hohlraum aufrecht zu erhalten.

Gemäß einer bevorzugten Ausführungsform wird dem doppelwandigen Behälter zumindest ein Gas, bevorzugt zumindest ein Gas und zumindest eine Flüssigkeit, zugeführt. Vorteilhafterweise wird bei einer Leckage der inneren Wand des Behälters das Gas aufgrund des höheren Drucks im Hohlraum zwischen der inneren und der äußeren Wand bezogen auf den Druck des Gases im Behälter am Austreten aus dem Behälter gehindert.

Gemäß der Erfindung wird der Überdruck im Hohlraum gemessen, vorzugsweise durch Messung des Druckes des dem doppelwandigen Behälter zugeführten Gases und durch Messung des Druckes des dem Hohlraum zugeführten Gases und durch Berechnung der Differenz dieser beiden Drücke ermittelt. Durch die Ermittlung des Differenzdrucks zwischen des dem doppelwandigen Behälter zugeführten Gases und des dem Hohlraum zugeführten Gases bezieht sich der Überdruck auf den Druck im Behälter und gewährleistet somit im Hohlraum einen höheren Druck als im Behälter. Demzufolge ist bei einer Leckage der inneren Wand die Strömungsrichtung durch die Leckage stets vom Hohlraum zum Inneren des Behälters und hindert so das Gas, das im Behälter gespeichert ist, am Austreten aus dem Behälter.

Um den Überdruck im Hohlraum zu regeln wird der Druck und/oder der Durchfluss des dem Hohlraum zugeführten Gases geregelt, sodass der Überdruck in dem Hohlraum, bezogen auf den Druck im Inneren des doppelwandigen Behälters, bevorzugt zwischen 10 mbar und 30 mbar ist. Gemäß einer bevorzugten Ausführungsform wird eine in dem doppelwandigen Behälter gespeicherte und aus diesem durch eine Leckage in der inneren Wand austretende, im Hohlraum sich ansammelnde, Flüssigkeit über eine Ablaufleitung am tiefsten Punkt des Hohlraumes in einen Monitoringbehälter geleitet, wobei der Monitoringbehälter teilweise mit einer weiteren Flüssigkeit, bevorzugt Wasser, besonders bevorzugt vollentsalztes Wasser oder enthärtetes Brauchwasser, gefüllt ist. Demzufolge ist der Monitoringbehälter über eine Leitung, die zum Führen einer Flüssigkeit vorgesehen ist, mit dem tiefsten Punkt des Hohlraumes des doppelwandigen Behälters verbunden. Dadurch wird ein Ansammeln einer im Behälter gespeicherten und aus diesem durch eine Leckage der inneren Wand austretenden Flüssigkeit im Hohlraum vermieden, sodass ein Austreten der Flüssigkeit durch die äußere Wand verhindert wird.

Vorteilhafterweise wird der Füllstand und/oder die Temperatur und/oder die Leitfähigkeit der Flüssigkeit im Monitoringbehälter zur Detektion von Leckagen des doppelwandigen Behälters gemessen. Für diesen Zweck ist es günstig, wenn der Monitoringbehälter ein Messgerät, insbesondere ein Radarmessgerät, zur Messung des Füllstandes der Flüssigkeit im Monitoringbehälter, aufweist. Weiters ist es günstig, wenn der Monitoringbehälter einen Leitfähigkeitssensor und/oder einen Temperatursensor aufweist, wobei vorzugsweise ein Multiparameter-Transmitter zur Auswertung der Messung der Leitfähigkeit und/oder der Temperatur der Flüssigkeit im Monitoringbehälter vorgesehen ist. Dies hat den Vorteil, das mit dem Multiparameter-Transmitter mehrere Parameter, wie beispielsweise Leitfähigkeit und Temperatur, gleichzeitig erfasst und überwacht werden können, um Abhängigkeiten der Parameter zu berücksichtigen. Ein Beispiel hierfür ist die Temperaturabhängigkeit der Leitfähigkeit.

Tritt im Behälter gespeicherte Flüssigkeit aus diesem aus, wird diese über die Ablaufleitung in den Monitoringbehälter geleitet, der teilweise mit einer weiteren Flüssigkeit gefüllt ist, wodurch der Flüssigkeits-Füllstand im Monitoringbehälter ansteigt. Somit kann im Monitoringbehälter mithilfe des Messgeräts, insbesondere des Radarmessgeräts, zur Messung des Füllstandes der Flüssigkeit im Monitoringbehälter eine Leckage des doppelwandigen Behälters detektiert werden. Die im Monitoringbehälter gespeicherte Flüssigkeit hat den Vorteil, dass beim Austritt einer im doppelwandigen Behälter gespeicherten Flüssigkeit, die eine hohe Temperatur aufweist, sich die im Monitoringbehälter gespeicherte kühlere Flüssigkeit und die aus dem doppelwandigen Behälter austretende wärmere Flüssigkeit im Monitoringbehälter vermischen und somit das Flüssigkeitsgemisch eine geringere Temperatur aufweist als die aus dem doppelwandigen Behälter austretende Flüssigkeit. Somit werden etwaige Messgeräte im Monitoringbehälter vor Überhitzung geschützt.

Wenn die Temperaturen der im Behälter gespeicherten Flüssigkeit und der im Monitoringbehälter gespeicherten Flüssigkeit unterschiedlich sind, kann mithilfe des Temperatursensors die Temperaturänderung der Flüssigkeit im Monitoringbehälter gemessen und durch die Änderung der Temperatur eine Leckage des doppelwandigen Behälters detektiert werden. Die aus dem Hohlraum des doppelwandigen Behälters in den Monitoringbehälter geleitete Flüssigkeit mischt sich mit der Flüssigkeit, die ursprünglich im Monitoringbehälter gespeichert war. Durch das Vermischen der beiden Flüssigkeiten ergibt sich eine mittlere Temperatur des dabei entstehenden Flüssigkeitsgemisches, die sich von der Temperatur der Flüssigkeit, mit der der Monitoringbehälter ursprünglich teilweise gefüllt war, unterscheidet. Durch diese Temperaturänderung ist eine Detektion einer Leckage des doppelwandigen Behälters möglich. Bei einer größeren Leckage der inneren Wand kann zusätzlich mithilfe der Temperaturmessung und einer Kühlung des Monitoringbehälters die Temperatur im Monitoringbehälter geregelt werden.

Bei unterschiedlicher Leitfähigkeit der im Behälter gespeicherten Flüssigkeit und der im Monitoringbehälter gespeicherten Flüssigkeit kann mithilfe des Leitfähigkeitssensors die Änderung der Leitfähigkeit der Flüssigkeit im Monitoringbehälter gemessen und durch diese Leitfähigkeitsänderung ebenfalls eine Leckage des doppelwandigen Behälters detektiert werden. Aufgrund des Hinzuführens der aus dem Hohlraum des doppelwandigen Behälters geleiteten Flüssigkeit in den Monitoringbehälter ändert sich die Leitfähigkeit der im Monitoringbehälter gespeicherten Flüssigkeit. Durch diese Änderung der Leitfähigkeit ist eine Detektion einer Leckage des doppelwandigen Behälters möglich.

Gemäß einer bevorzugten Ausführungsform wird bei Erreichen eines vorgegebenen Grenzwertes des Füllstandes und/oder der Temperatur und/oder der Leitfähigkeit der Flüssigkeit im Monitoringbehälter ein Alarm ausgelöst. Durch das Auslösen des Alarms wird der Betreiber des doppelwandigen Behälters auf eine Leckage der inneren Wand des Behälters hingewiesen, sodass rechtzeitig notwendige Maßnahmen auf die Leckage der inneren Wand getroffen werden können.

Um ein Überlaufen des Monitoringbehälters zu verhindern ist es günstig, wenn bei Erreichen eines Füllstand-Grenzwertes der Flüssigkeit im Monitoringbehälter der Monitoringbehälter über ein Bodenablassventil in einen weiteren Behälter, vorzugsweise einen Intermediate-Bulk-Container (IBC), entleert wird. Dies hat zum Vorteil, dass die aus dem doppelwandigen Behälter austretende Flüssigkeit nicht mit der Umgebung in Kontakt gebracht wird.

Gemäß einer bevorzugten Ausführungsform weist das erfindungsgemäße Behältersystem ein Durchflussmessgerät zur Messung der Durchflussrate des dem Hohlraum des doppelwandigen Behälters zugeführten Gases auf. Im Falle einer Leckage wird der Durchfluss des Gases in der Leitung vom Verdichter zum Hohlraum durch Steuern/Regeln des Gasdurchflusses mithilfe der Steuer-/Regelungsvorrichtung, bevorzugt durch zumindest teilweises Schließen eines Regelventils, insbesondere eines Bypassregelventils, ansteigen, sodass mithilfe des Durchflussmessgeräts die Änderung der Durchflussrate gemessen und durch diese Änderung eine Leckage des doppelwandigen Behälters detektiert werden kann.

Um den doppelwandigen Behälter vor ätzenden gespeicherten Medien zu schützen, sind die innere Wand und die äußere Wand mit einer Sperrschicht, vorzugsweise aus einem Perfluoralkoxy-Polymer (PFA), ausgekleidet. Durch diese Auskleidung der Behälterwände wird einer Leckage des Behälters durch ätzende, im Behälter befindliche Medien, wie beispielsweise starke Säuren oder Basen, vorgebeugt.

Gemäß einer bevorzugten Ausführungsform wird der doppelwandige Behälter des Behältersystems als Säure-Kondensatorwanne in einem Entschwefelungsverfahren, bevorzugt einem Wet-Sulphuric-Acid(WSA)-Verfahren, verwendet. Aufgrund der in der Säure-Kondensatorwanne gespeicherten Schwefelsäure ist ein Austreten der Schwefelsäure durch eine Leckage in die Umgebung zu vermeiden.

Das erfindungsgemäße Behältersystem verhindert solche durch ätzende Medien wie Schwefelsäure hervorgerufenen Leckagen und detektiert Leckagen der inneren Wand des doppelwandigen Behälters zur Vermeidung einer Leckage der äußeren Wand und folglich eines Austretens der Schwefelsäure aus dem doppelwandigen Behälter.

Die Erfindung wird nachstehend anhand dem in der Zeichnung gezeigten, nicht einschränkenden Ausführungsbeispiel weiter erläutert.

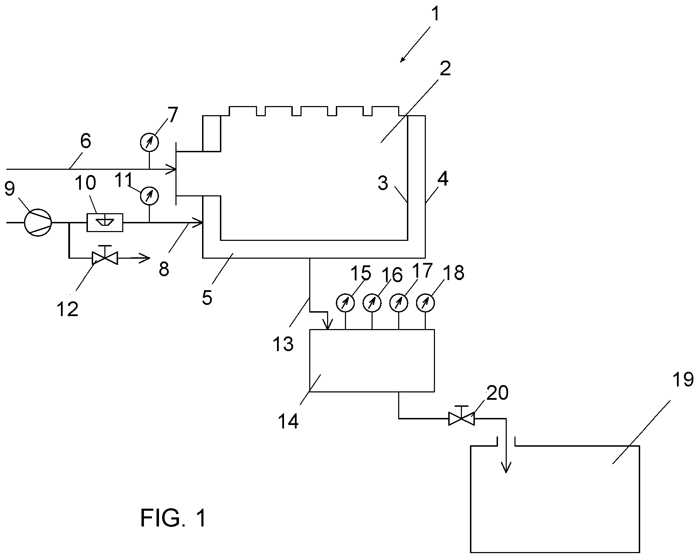

Fig. 1 zeigt ein Fließschema eines erfindungsgemäßen Behältersystems, bei welchem Leckagen eines doppelwandigen Behälters detektiert und verhindert werden.

In Fig. 1 ist ein Fließschema eines erfindungsgemäßen Behältersystems 1 gezeigt, das einen doppelwandigen Behälter 2 aufweist. Der doppelwandige Behälter 2 wird gemäß der gezeigten Ausführungsform als Säure-Kondensatorwanne in einem Wet-Sulphuric-Acid(WSA)-Verfahren verwendet. Mithilfe des WSA-Verfahrens, das beispielsweise aus der DE 689 12 776 T2 bekannt ist, wird Schwefelsäure in hauptsächlich senkrecht stehenden Rohren, die in der Säure-Kondensatorwanne angeordnet sind, erzeugt, wobei Schwefelsäuredämpfe kondensieren und Tröpfchen der Schwefelsäure in einem Spezialfilter aufgefangen werden. Dabei wird schwefelsäurehaltiges Gas bei einer Temperatur über dem Schwefelsäuretaupunkt von unten zu den Rohren zugeführt und unter der Aufwärtsströmung in den Rohren auf eine Temperatur gekühlt, sodass Schwefelsäure kondensiert. Am oberen Ende der Rohre sind Aerosolfilter zum Abscheiden der kondensierten Schwefelsäure befestigt.

In der gezeigten Ausführungsform ist der doppelwandige Behälter 2 ein geschlossener Behälter, der eine innere Wand 3 und eine äußere Wand 4 aufweist, wobei zwischen der inneren Wand 3 und der äußeren Wand 4 ein Hohlraum 5 ausgebildet ist. Die innere Wand 3 und die äußere Wand 4 sind mit einer Sperrschicht aus einem Perfluoralkoxy-Polymer (PFA) ausgekleidet, um die Resistenz gegenüber der in dem Behälter 2 gespeicherten Flüssigkeit, die zumindest teilweise aus Schwefelsäure besteht, zu erhöhen.

In der gezeigten Ausführungsform wird über eine Zuleitung 6 schwefelhaltiges Abgas in das Innere des geschlossenen doppelwandigen Behälters 2 geführt, um Schwefelsäuredämpfe im Behälter 2 zu kondensieren. Ein Druckmessgerät 7 misst den Druck der Zuleitung 6, wobei dieser Druck dem Druck im Inneren des Behälters 2 entspricht. Über eine Leitung 8, die mit dem Hohlraum 5 des Behälters 2 verbunden ist, wird Gas dem Hohlraum 5 zugeführt. Dieses Gas wird mithilfe eines Verdichters, der als Seitenkanalverdichter 9 ausgeführt und mit der Leitung 8 verbunden ist, auf Überdruck gebracht. Des Weiteren sind an der Leitung 8 ein Durchflussmessgerät 10 zum Messen der Durchflussrate und ein Druckmessgerät 11 zur Druckmessung in der Leitung 8 angeordnet. Mithilfe der Druckmessung in der Zuleitung 6 durch das Druckmessgerät 7 und der Druckmessung in der Leitung 8 durch das Druckmessgerät 11 wird ein Differenzdruck zwischen dem Inneren des geschlossenen Behälters 2 und dem Hohlraum 5 ermittelt, wobei das Signal des ermittelten Differenzdrucks an eine Steuer-/Regelungsvorrichtung, die in der gezeigten Ausführungsform als Bypassregelventil 12 ausgeführt ist, gesendet wird. Im Normalbetrieb wird mittels Seitenkanalverdichter 9 und Druckregelung durch das Bypassregelventil 12 ein konstanter Überdruck im Hohlraum 5 des Behälters 2 von 20 mbar, bezogen auf den Druck im Inneren des Behälters 2, erzeugt. Sollte im Inneren des Behälters 2 kein Überdruck gegenüber der Umgebung vorliegen, beispielsweise wenn kein schwefelhaltiges Abgas zugeführt wird, wird auch der Seitenkanalverdichter 9 außer Betrieb gesetzt.

Im Fall einer Leckage der inneren Wand 3 strömt Gas aus dem Hohlraum 5 in das Innere des Behälters 2 aus, wodurch der Überdruck im Hohlraum 5 sinkt. Dadurch steigt die Durchflussrate des Gases in der Leitung 8 an, wobei dieser Anstieg mithilfe des Durchflussmessgeräts 10 detektiert und ein Alarm gemeldet wird. Gleichzeitig fällt der Druck in der Leitung 8 ab, wobei das Bypassregelventil 12 den Druckabfall ausgleicht.

In der gezeigten Ausführungsform weist der doppelwandige Behälter 2 eine Ablaufleitung 13 aus Polytetrafluorethylen (PTFE) am tiefsten Punkt des Hohlraumes 5 auf. Diese Ablaufleitung 13 ist mit einem Monitoringbehälter 14 verbunden, der ungefähr zu 70 % mit enthärtetem Brauchwasser gefüllt ist. Der Monitoringbehälter 14 weist ein Radarmessgerät 15 zur Messung des Füllstandes der im Monitoringbehälter 14 gespeicherten Flüssigkeit auf. Zusätzlich zum Radarmessgerät 15 weist der Monitoringbehälter 14 einen Füllstandgrenzwertgeber 16 zur Alarmierung bei Erreichen eines Füllstandgrenzwertes auf. Des Weiteren weist der Monitoringbehälter 14 in der gezeigten Ausführungsform einen Leitfähigkeitssensor 17 und einen Temperatursensor 18 zum Messen der Leitfähigkeit bzw. der Temperatur der im Monitoringbehälter 14 gespeicherten Flüssigkeit auf. Um einen sicheren Betrieb der Leitfähigkeitsmessung zu gewährleisten, muss der letzte Teil des Leitfähigkeitssensors 17, der in der gezeigten Ausführungsform als Sonde ausgeführt ist, immer mit Flüssigkeit umspült werden. Die Auswertung der Leitfähigkeitsmessung und der Temperaturmessung erfolgt über einen Multiparameter-Transmitter, der in Fig. 1 nicht gezeigt ist.

In der gezeigten Ausführungsform tritt bei einer Leckage der inneren Wand 3 die im Behälter 2 gespeicherte Flüssigkeit, die zumindest teilweise aus Schwefelsäure besteht, durch die Leckage aus und sammelt sich im Hohlraum 5 an, wobei die Flüssigkeit durch die Schwerkraft zum tiefsten Punkt des Hohlraumes 5 fließt. Am tiefsten Punkt wird die Flüssigkeit über die Ablaufleitung 13 in den Monitoringbehälter 14 geleitet, wobei sich die Flüssigkeit im Monitoringbehälter 14 mit dem gespeicherten enthärteten Brauchwasser vermischt. Die Temperatur des gespeicherten enthärteten Brauchwassers beträgt aufgrund einer konstanten Wandkühlung des Monitoringbehälters 14 ungefähr 30 °C. Durch das Vermischen des enthärteten Brauchwassers mit der wärmeren, in den Monitoringbehälter 14 geleiteten Flüssigkeit aus dem Behälter 2 steigt die Temperatur des Flüssigkeitsgemisches im Monitoringbehälter 14 an. Dieser Temperaturanstieg wird mithilfe des Temperatursensors 18 gemessen und ein entsprechendes Signal an den Multiparameter-Transmitter gesendet. Der Multiparameter-Transmitter wertet das Signal des Temperaturanstiegs aus und löst bei einer Flüssigkeitstemperatur im Monitoringbehälter 14 von 50 °C einen Alarm aus.

Durch das Vermischen des enthärteten Brauchwassers mit der Flüssigkeit aus dem Behälter 2 ändert sich zusätzlich zur Temperatur auch die Leitfähigkeit des Flüssigkeitsgemisches. Diese Leitfähigkeitsänderung wird mithilfe des Leitfähigkeitssensors 17 gemessen und ein entsprechendes Signal an den Multiparameter-Transmitter gesendet. Der Multiparameter-Transmitter wertet das Signal des Anstiegs der Leitfähigkeit aus und löst ebenfalls einen Alarm aus.

Aufgrund der in den Monitoringbehälter 14 eingeleiteten Flüssigkeit steigt der Füllstand des im Monitoringbehälter 14 gespeicherten Flüssigkeitsgemisches an, wobei der Anstieg des Füllstandes vom Radarmessgerät 15 gemessen und ein entsprechendes Signal an eine Vorrichtung zum Auswerten der Messung gesendet wird. Durch den Anstieg des Füllstandes kann eine Leckage der inneren Wand 3 des Behälters 2 erkannt werden, sodass rechtzeitig notwendige Maßnahmen auf die Leckage der inneren Wand 3 getroffen werden können. Wenn die Füllstandshöhe der Flüssigkeit ungefähr 90 % der Höhe des inneren Volumens des Monitoringbehälters 14 beträgt, wird durch den Füllstandgrenzwertgeber 16 ein Alarm ausgelöst. Beim Auslösen des Alarms wird der Monitoringbehälter 14 in einen unterhalb des Monitoringbehälters 14 aufgestellten Intermediate-Bulk-Container (IBC) 19 mittels eines Bodenablassventils 20 entleert, um einen Kontakt der aus dem Behälter 2 austretenden und in den Monitoringbehälter 14 geleiteten Flüssigkeit mit der Umgebung zu verhindern.

## Patentansprüche

1. Verfahren zur Detektion und Verhinderung von Leckagen eines doppelwandigen Behälters (2) zum Lagern oder Speichern von giftigen, ätzenden, reizenden und/oder brennbaren Medien, wobei der doppelwandige Behälter (2) eine innere Wand (3) und eine äußere Wand (4) aufweist, wobei zwischen der inneren Wand (3) und der äußeren Wand (4) ein Hohlraum (5) ausgebildet ist, wobei im Hohlraum (5) ein Überdruck erzeugt wird, wobei dem Hohlraum (5) bei einer Leckage der inneren Wand (3) ein Gas zugeführt wird, um einen Überdruck in dem Hohlraum (5) aufrecht zu erhalten, **dadurch gekennzeichnet, dass** der Überdruck im Hohlraum (5) gemessen wird und der Druck und/oder der Durchfluss des dem Hohlraum (5) zugeführten Gases geregelt wird, sodass der Überdruck in dem Hohlraum (5) bezogen auf den Druck im Inneren des doppelwandigen Behälters (2) zwischen 5 mbar und 50 mbar ist.

2. Verfahren nach Anspruch 1, **dadurch gekennzeichnet, dass** dem Behälter (2) zumindest ein Gas, bevorzugt zumindest ein Gas und zumindest eine Flüssigkeit, zugeführt wird.

3. Verfahren nach Anspruch 2, **dadurch gekennzeichnet, dass** der Überdruck im Hohlraum (5) gemessen wird, vorzugsweise durch Messung des Druckes des dem doppelwandigen Behälter (2) zugeführten Gases und durch Messung des Druckes des dem Hohlraum (5) zugeführten Gases und durch Berechnung der Differenz dieser beiden Drücke ermittelt wird.

4. Verfahren nach einem der Anspruch 1 bis 3, **dadurch gekennzeichnet, dass** der Druck und/oder der Durchfluss des dem Hohlraum (5) zugeführten Gases geregelt wird, sodass der Überdruck in dem Hohlraum (5), bezogen auf den Druck im Inneren des doppelwandigen Behälters (2) zwischen 10 mbar und 30 mbar ist.

5. Verfahren nach einem der Ansprüche 1 bis 4, **dadurch gekennzeichnet, dass** eine in dem doppelwandigen Behälter (2) gespeicherte und aus diesem durch eine Leckage der inneren Wand (3) austretende, im Hohlraum (5) sich ansammelnde, Flüssigkeit über eine Ablaufleitung (13) am tiefsten Punkt des Hohlraumes (5) in einen Monitoringbehälter (14) geleitet wird, wobei der Monitoringbehälter (14) teilweise mit einer weiteren Flüssigkeit, bevorzugt Wasser, besonders bevorzugt vollentsalztes Wasser oder enthärtetes Brauchwasser, gefüllt ist.

6. Verfahren nach Anspruch 5, **dadurch gekennzeichnet, dass** der Füllstand und/oder die Temperatur und/oder die Leitfähigkeit der Flüssigkeit im Monitoringbehälter (14) zur Detektion von Leckagen des doppelwandigen Behälters (2) gemessen wird.

7. Verfahren nach Anspruch 5 oder 6, **dadurch gekennzeichnet, dass** bei Erreichen eines vorgegebenen Grenzwertes des Füllstandes und/oder der Temperatur und/oder der Leitfähigkeit der Flüssigkeit im Monitoringbehälter (14) ein Alarm ausgelöst wird.

8. Verfahren nach einem der Ansprüche 5 bis 7, **dadurch gekennzeichnet, dass** bei Erreichen eines Füllstand-Grenzwertes der Flüssigkeit im Monitoringbehälter (14) der Monitoringbehälter (14) über ein Bodenablassventil (20) in einen weiteren Behälter, vorzugsweise einen Intermediate-Bulk-Container (IBC) (19), entleert wird.

9. Behältersystem (1) zum Lagern oder Speichern von giftigen, ätzenden, reizenden und/oder brennbaren Medien, aufweisend:
- einen doppelwandigen Behälter (2), der eine innere Wand (3) und eine äußere Wand (4) aufweist, wobei zwischen der inneren Wand (3) und der äußeren Wand (4) ein Hohlraum (5) ausgebildet ist; **dadurch gekennzeichnet, dass** es Folgendes aufweist:
- einen Verdichter, bevorzugt einen Seitenkanalverdichter (9) ;
- eine mit der Führung eines Gases vorgesehenen Leitung (8) zum Verbinden der äußeren Wand (4) mit dem Verdichter;
- eine Steuer-/Regelungsvorrichtung, bevorzugt ein Regelventil, insbesondere ein Bypassregelventil (12), zum Steuern/Regeln eines Gasdurchflusses in der Leitung (8), sodass der Überdruck in dem Hohlraum (5) bezogen auf den Druck im Inneren des doppelwandigen Behälters (2) zwischen 5 mbar und 50 mbar ist; und
- ein Druckmessgerät (11) zur Messung des Druckes im Hohlraum (5) des doppelwandigen Behälters (2).

10. Behältersystem (1) nach Anspruch 9, **gekennzeichnet durch** einen Monitoringbehälter (14), der mit dem tiefsten Punkt des Hohlraumes (5) des doppelwandigen Behälters (2) verbunden ist.

11. Behältersystem (1) nach Anspruch 9 oder 10, **gekennzeichnet durch** ein Durchflussmessgerät (10) zur Messung der Durchflussrate des dem Hohlraum (5) des doppelwandigen Behälters (2) zugeführten Gases.

12. Behältersystem (1) nach einem der Ansprüche 9 bis 11, **dadurch gekennzeichnet, dass** der Monitoringbehälter (14) ein Messgerät, insbesondere ein Radarmessgerät (15), zur Messung des Füllstandes aufweist.

13. Behältersystem (1) nach einem der Ansprüche 9 bis 12, **dadurch gekennzeichnet, dass** der Monitoringbehälter (14) einen Leitfähigkeitssensor (17) und/oder einen Temperatursensor (18) aufweist, wobei vorzugsweise ein Multiparameter-Transmitter zur Auswertung der Messung der Leitfähigkeit und/oder der Temperatur vorgesehen ist.

14. Behältersystem (1) nach einem der Ansprüche 9 bis 13, **dadurch gekennzeichnet, dass** die innere Wand (3) und die äußere Wand (4) des doppelwandigen Behälters (2) mit einer Sperrschicht, vorzugsweise aus einem Perfluoralkoxy-Polymer (PFA), ausgekleidet sind.

15. Verwendung des doppelwandigen Behälters (2) des Behältersystems (1) nach einem der Ansprüche 9 bis 14 als Säure-Kondensatorwanne in einem Entschwefelungsverfahren, bevorzugt einem Wet-Sulphuric-Acid(WSA)-Verfahren.

## Claims

1. Method for detecting and preventing leakages in a double-walled container (2) for storing toxic, corrosive, irritating and/or flammable media, the double-walled container (2) having an inner wall (3) and an outer wall (4), a cavity (5) being formed between the inner wall (3) and the outer wall (4), an overpressure being generated in the cavity (5), a gas being supplied to the cavity (5) in the event of a leakage in the inner wall (3) in order to maintain an overpressure in the cavity (5), **characterised in that** the overpressure in the cavity (5) is measured and the pressure and/or the flow of the gas supplied to the cavity (5) is controlled such that the overpressure in the cavity (5) relative to the pressure inside the double-walled container (2) is between 5 mbar and 50 mbar.

2. Method according to claim 1, **characterised in that** at least one gas, preferably at least one gas and at least one liquid, is supplied to the container (2).

3. Method according to claim 2, **characterised in that** the overpressure in the cavity (5) is measured, preferably by measuring the pressure of the gas supplied to the double-walled container (2) and by measuring the pressure of the gas supplied to the cavity (5) and by calculating the difference between these two pressures.

4. Method according to any of claims 1 to 3, **characterised in that** the pressure and/or the flow of the gas supplied to the cavity (5) is controlled such that the overpressure in the cavity (5) relative to the pressure inside the double-walled container (2) is between 10 mbar and 30 mbar.

5. Method according to any of claims 1 to 4, **characterised in that** a liquid which is stored in the double-walled container (2), emerges therefrom through a leakage in the inner wall (3) and accumulates in the cavity (5) is fed via a discharge line (13) at the lowest point of the cavity (5) into a monitoring container (14), the monitoring container (14) being partially filled with another liquid, preferably water, particularly preferably deionised water or softened process water.

6. Method according to claim 5, **characterised in that** the fill level and/or the temperature and/or the conductivity of the liquid in the monitoring container (14) is measured in order to detect leakages in the double-walled container (2).

7. Method according to either claim 5 or claim 6, **characterised in that** an alarm is triggered when the fill level and/or the temperature and/or the conductivity of the liquid in the monitoring container (14) reaches a predetermined limit value.

8. Method according to any of claims 5 to 7, **characterised in that** when the liquid in the monitoring container (14) reaches a fill level limit value, the monitoring container (14) is emptied via a bottom outlet valve (20) into a further container, preferably an intermediate bulk container (IBC) (19).

9. Container system (1) for storing toxic, corrosive, irritating and/or flammable media, comprising:
- a double-walled container (2) having an inner wall (3) and an outer wall (4), a cavity (5) being formed between the inner wall (3) and the outer wall (4); **characterised in that** it comprises the following:
- a compressor, preferably a side channel compressor (9);
- a line (8) which is provided for carrying a gas for connecting the outer wall (4) to the compressor;
- an open-loop/closed-loop control device, preferably a control valve, in particular a bypass control valve (12), for controlling a gas flow in the line (8) by means of open-loop/closed-loop control such that the overpressure in the cavity (5) relative to the pressure inside the double-walled container (2) is between 5 mbar and 50 mbar; and
- a pressure gauge (11) for measuring the pressure in the cavity (5) of the double-walled container (2).

10. Container system (1) according to claim 9, **characterised by** a monitoring container (14) which is connected to the lowest point of the cavity (5) of the double-walled container (2).

11. Container system (1) according to either claim 9 or claim 10, **characterised by** a flowmeter (10) for measuring the flow rate of the gas supplied to the cavity (5) of the double-walled container (2).

12. Container system (1) according to any of claims 9 to 11, **characterised in that** the monitoring container (14) has a measuring device, in particular a radar measuring device (15), for measuring the fill level.

13. Container system (1) according to any of claims 9 to 12, **characterised in that** the monitoring container (14) has a conductivity sensor (17) and/or a temperature sensor (18), a multi-parameter transmitter for evaluating the measurement of the conductivity and/or the temperature preferably being provided.

14. Container system (1) according to any of claims 9 to 13, **characterised in that** the inner wall (3) and the outer wall (4) of the double-walled container (2) are lined with a barrier layer, preferably made of a perfluoroalkoxy polymer (PFA).

15. Use of the double-walled container (2) of the container system (1) according to any of claims 9 to 14 as an acid condenser tank in a desulfurisation process, preferably a wet sulfuric acid (WSA) process.

## Revendications

1. Procédé pour la détection et la prévention de fuites d'un récipient à double paroi (2) pour l'entreposage ou le stockage de milieux toxiques, caustiques, irritants et/ou combustibles, où le récipient à double paroi (2) comporte une paroi interne (3) et une paroi externe (4), où une cavité (5) est formée entre la paroi interne (3) et la paroi externe (4), où une surpression est produite dans la cavité (5), où un gaz est envoyé dans la cavité (5) en cas de fuite de la paroi interne (3) afin de maintenir une surpression dans la cavité (5), **caractérisé en ce que** la surpression dans la cavité (5) est mesurée et la pression et/ou le débit du gaz envoyé dans la cavité (5) est régulé de sorte que la surpression dans la cavité (5) par rapport à la pression à l'intérieur du récipient à double paroi (2) est entre 5 mbar et 50 mbar.

2. Procédé selon la revendication 1, **caractérisé en ce qu'**au moins un gaz, de préférence au moins un gaz et au moins un liquide, est envoyé au récipient (2).

3. Procédé selon la revendication 2, **caractérisé en ce que** la surpression dans la cavité (5) est mesurée, de préférence par mesure de la pression du gaz envoyé dans le récipient à double paroi (2) et par mesure de la pression du gaz envoyé dans la cavité (5), et est déterminée par calcul de la différence entre ces deux pressions.

4. Procédé selon l'une des revendications 1 à 3, **caractérisé en ce que** la pression et/ou le débit du gaz envoyé dans la cavité (5) est régulé de sorte que la surpression dans la cavité (5), par rapport à la pression à l'intérieur du récipient à double paroi (2) est entre 10 mbar et 30 mbar.

5. Procédé selon l'une des revendications 1 à 4, **caractérisé en ce qu'**un liquide stocké dans le récipient à double paroi (2) et sortant de celui-ci par une fuite de la paroi interne (3), s'accumulant dans la cavité (5) est acheminé par une conduite d'évacuation (13) au point le plus bas de la cavité (5) dans un récipient de surveillance (14), où le récipient de surveillance (14) est partiellement rempli d'un autre liquide, de préférence de l'eau, de manière particulièrement préférée de l'eau entièrement déminéralisée ou de l'eau industrielle adoucie.

6. Procédé selon la revendication 5, **caractérisé en ce que** le niveau de remplissage et/ou la température et/ou la conductivité du liquide dans le récipient de surveillance (14) est mesuré pour la détection de fuites dans le récipient à double paroi (2).

7. Procédé selon la revendication 5 ou 6, **caractérisé en ce qu'**une alarme est déclenchée lorsqu'une valeur limite prédéterminée du niveau de remplissage et/ou de la température et/ou de la conductivité du liquide dans le récipient de surveillance (14) est atteinte.

8. Procédé selon l'une des revendications 5 à 7, **caractérisé en ce que** lorsqu'une valeur limite du niveau de remplissage du liquide dans le récipient de surveillance (14) est atteinte, le récipient de surveillance (14) est vidé via une vanne de vidange inférieure (20) dans un autre récipient, de préférence un Intermediate-Bulk-Container (IBC) (19).

9. Système de récipient (1) pour l'entreposage ou le stockage de milieux toxiques, corrosifs, irritants et/ou inflammables, comportant:
- un récipient à double paroi (2), qui comporte une paroi interne (3) et une paroi externe (4), où une cavité (5) est formée entre la paroi interne (3) et la paroi externe (4); **caractérisé en ce qu'**il comporte ce qui suit:
- un compresseur, de préférence un compresseur à canal latéral (9);
- une conduite (8) prévue avec le guidage d'un gaz pour relier la paroi externe (4) au compresseur;
- un dispositif de commande/régulation, de préférence une vanne de régulation, en particulier une vanne de régulation de dérivation (12), pour la commande/régulation d'un débit de gaz dans la conduite (8), de sorte que la surpression dans la cavité (5) par rapport à la pression à l'intérieur du récipient à double paroi (2) est entre 5 mbar et 50 mbar; et
- un manomètre (11) pour mesurer la pression dans la cavité (5) du récipient à double paroi (2).

10. Système de récipient (1) selon la revendication 9, **caractérisé par** un récipient de surveillance (14) qui est relié au point le plus bas de la cavité (5) du récipient à double paroi (2).

11. Système de récipient (1) selon la revendication 9 ou 10, **caractérisé par** un débitmètre (10) pour mesurer le débit du gaz envoyé dans la cavité (5) du récipient à double paroi (2).

12. Système de récipient (1) selon l'une des revendications 9 à 11, **caractérisé en ce que** le récipient de surveillance (14) comporte un appareil de mesure, en particulier un appareil de mesure radar (15) pour mesurer le niveau de remplissage.

13. Système de récipient (1) selon l'une des revendications 9 à 12, **caractérisé en ce que** le récipient de surveillance (14) comporte un capteur de conductivité (17) et/ou un capteur de température (18), où de préférence un transmetteur multiparamètres pour l'évaluation de la mesure de la conductivité et/ou de la température est prévu.

14. Système de récipient (1) selon l'une des revendications 9 à 13, **caractérisé en ce que** la paroi interne (3) et la paroi externe (4) du récipient à double paroi (2) sont recouvertes d'une couche barrière, de préférence en un polymère perfluoroalcoxy (PFA).

15. Utilisation du récipient à double paroi (2) du système de récipient (1) selon l'une des revendications 9 à 14 comme bac condenseur d'acide dans un procédé de désulfuration, de préférence un procédé Wet-Sulphuric-Acid (WSA).
